# FASCICULE DE BREVET EUROPEEN

(11) **EP 0 859 161 B1**
(45) Date de publication et mention de la délivrance du brevet: **02.05.2002**
(21) Numéro de dépôt: 98400283.2
(22) Date de dépôt: 09.02.1998
(51) Int. Cl.: F16D 23/14

(54) **Dispositif de manoeuvre d'embrayage à organe élastique d'autoalignement**
Kupplungsbetätigungsvorrichtung mit einem selbsteinstellenden elastischen Element
Clutch actuating device with a self-aligning elastic member

(30) Priorité: 13.02.1997 FR 9701694
(43) Date de publication de la demande: 19.08.1998
(73) Titulaire: SKF FRANCE, F-92140 Clamart (FR); VALEO, 75017 Paris (FR)
(72) Inventeur: Ponson, Frédéric, 37230 Luynes (FR); Kromwel, Jean Michel, 80000 Amiens (FR)
(74) Mandataire: Casalonga, Axel

(56) Documents cités:
- DE-A- 4 428 071
- FR-A- 2 145 977
- FR-A- 2 675 877
- GB-A- 2 068 497
- US-A- 4 815 867

## Description

La présente invention concerne le domaine des butées d'embrayage, notamment pour véhicules automobiles.

Le document DE-A-4 428 071 décrit un dispositif selon le préambule de la revendication 1, comprennant une lèvre annulaire de raclage venant frotter sur le tube-guide pour former un joint racleur, la lèvre annulaire étant montée séparée de l'organe d'auto-alignement.

Les butées d'embrayage comportent, en général, un élément de manoeuvre pouvant se mouvoir en translation sur un tube-guide sous l'action d'un organe de commande tel qu'une fourchette de débrayage ou le piston d'un système de commande hydraulique, un roulement de butée destiné à agir sur le dispositif débrayeur d'un embrayage, tel qu'une diaphragme et, entre le roulement de butée et l'élément de manoeuvre, une liaison d'autocentrage assurant la liaison axiale entre le roulement de butée et l'élément de manoeuvre et permettant au roulement de butée de s'autocentrer par rapport au diaphragme dans le cas où, au montage, l'axe du diaphragme et l'axe du roulement de butée ne sont pas exactement confondus.

L'élément de manoeuvre peut comporter sur son extrémité libre un joint racleur. Ce joint racleur peut servir à éviter l'entrée de salissures entre les pièces en mouvement relatif de translation. En effet, l'accumulation de salissures diverses entre le tube-guide et l'élément de manoeuvre a des conséquences néfastes sur le bon fonctionnement du mécanisme en raison de l'augmentation de l'effort axial de manoeuvre, de la détérioration des pièces en contact et du risque de grippage du mécanisme.

Le joint racleur peut également servir à retenir un lubrifiant interposé entre l'élément de manoeuvre et le tube-guide dans le cas d'une butée à commande mécanique. Dans le cas d'une butée à commande hydraulique, le joint racleur sert également à éviter les fuites d'huile en direction des garnitures de friction du disque d'embrayage, lesdites fuites pouvant générer des troubles de fonctionnement de l'embrayage tel qu'un patinage ou des broutements.

Des butées autocentreuses à commande hydraulique munies d'un joint racleur sont décrites par exemple dans le document WO-A-96 24782. Ce type de butée réclame plusieurs pièces spécifiques pour assurer les fonctions du joint racleur, de l'étanchéité du roulement et de la liaison d'autocentrage. De plus, le roulement présente une forme compliquée et relativement encombrante dans le sens radial.

On connaît également dans l'art antérieur le document FR-A 2 663 702 qui concerne une butée d'embrayage équipé d'un manchon élastique de liaison d'autocentrage possédant une lèvre frontale qui forme un joint d'étanchéité pour le roulement. Une telle butée est dépourvue de joint racleur.

La présente invention a pour objet de remédier aux inconvénients des dispositifs ci-dessus.

La présente invention a également pour objet un dispositif de manoeuvre d'embrayage pourvu d'une étanchéité efficace et bon marché entre le tube-guide et l'élément de manoeuvre.

Le dispositif de manoeuvre d'embrayage, selon l'invention, est du type comprenant un roulement de butée, muni d'une bague non tournante et d'une bague tournante, capable d'agir sur un diaphragme de mécanisme d'embrayage, un élément de manoeuvre comprenant une portion tubulaire et une collerette radiale, mobile axialement le long d'un tube-guide, et un organe d'auto-alignement élastique disposé radialement entre le roulement de butée et la portion tubulaire de l'élément de manoeuvre. L'organe d'auto-alignement élastique comprend une lèvre annulaire de raclage venant frotter sur le tube-guide pour former un joint racleur. On dispose ainsi d'un élément d'étanchéité peu onéreux et simple à monter, empêchant l'intrusion d'impuretés entre l'élément de manoeuvre et le tube-guide lors du mouvement axial relatif de ces deux pièces sous l'action d'un dispositif de commande ainsi que d'éventuelles fuites de lubrifiant ou d'huile.

Dans un mode de réalisation de l'invention, la lèvre de raclage est dirigée axialement vers le mécanisme d'embrayage et radialement vers l'intérieur pour réaliser un bon raclage.

Avantageusement, l'organe d'auto-alignement élastique et la lèvre de raclage sont monoblocs. On facilite ainsi le montage du dispositif tout en réduisant les coûts de fabrication.

Dans un mode de réalisation de l'invention, l'organe d'auto-alignement élastique comprend un manchon en contact avec l'alésage de la bague non tournante du roulement de butée. L'alésage du manchon est muni d'une pluralité de nervures radialement en saillie vers l'intérieur et s'étendant axialement sur la largeur du manchon. Les nervures sont inclinées et sont en forme de lames dont les extrémités libres viennent en appui sur la portion tubulaire de l'organe de manoeuvre pour réaliser un bon antocentrage.

Avantageusement, l'organe d'auto-alignement élastique comprend une lèvre annulaire supplémentaire assurant l'étanchéité entre les bagues non tournante et tournante du roulement de butée de sorte que ledit organe réalise trois fonctions de manière économique.

Dans un mode de réalisation de l'invention, l'extrémité libre de la portion tubulaire de l'organe de manoeuvre comprend un bourrelet annulaire dirigé radialement vers l'extérieur pour former une butée axiale pour l'organe d'auto-alignement élastique. On assure ainsi la solidarisation axiale du roulement de butée et de l'élément de manoeuvre. Cette solidarisation est aisée à réaliser, le montage du roulement muni de l'organe d'auto-alignement se faisant par enfilage axial.

De préférence, la lèvre de raclage est en contact avec une surface d'appui de l'extrémité libre de la portion tubulaire de l'organe de manoeuvre. La surface d'appui peut être oblique, par exemple à 45°, formant un chanfrein de l'extrémité libre de la portion tubulaire et permet d'éviter un retournement éventuellement de la lèvre de raclage lors d'un mouvement de l'élément de manoeuvre par rapport au tube-guide. La surface d'appui peut être avantageusement réalisée à la faveur du bourrelet sur la surface de celui-ci faisant face au diaphragme mais il est bien sûr possible de prévoir ladite surface d'appui indépendamment du bourrelet annulaire, que ce dernier existe ou non.

L'organe d'auto-alignement élastique peut être solidarisé avec la bague non tournante par complémentarité de formes, mais la solidarisation peut également être effectuée par surmoulage ou par collage dudit organe dans ladite bague.

Le dispositif de manoeuvre d'embrayage peut être à commande mécanique, électromécanique ou à commande hydraulique.

On réalise ainsi de manière simple et économique un organe d'auto-alignement élastique susceptible de remplir simultanément au moins les fonctions de liaison d'autocentrage et de joint racleur ce qui permet de réduire le nombre de pièces et de simplifier le roulement dont les bagues sont avantageusement en tôle emboutie.

L'invention sera mieux comprise à l'étude de la description détaillée de quelques modes de réalisation pris à titre d'exemple nullement limitatifs et illustrés par les dessins annexés sur lesquels :
la figure 1 est une vue en coupe axiale d'un dispositif selon un premier mode de réalisation de l'invention;
la figure 2 est une vue en demi-coupe axiale d'un dispositif selon un second mode de réalisation de l'invention; et
la figure 3 est une vue en coupe transversale de l'organe d'auto-alignement élastique et de l'élément de manoeuvre de la figure 1 et de la figure 2.

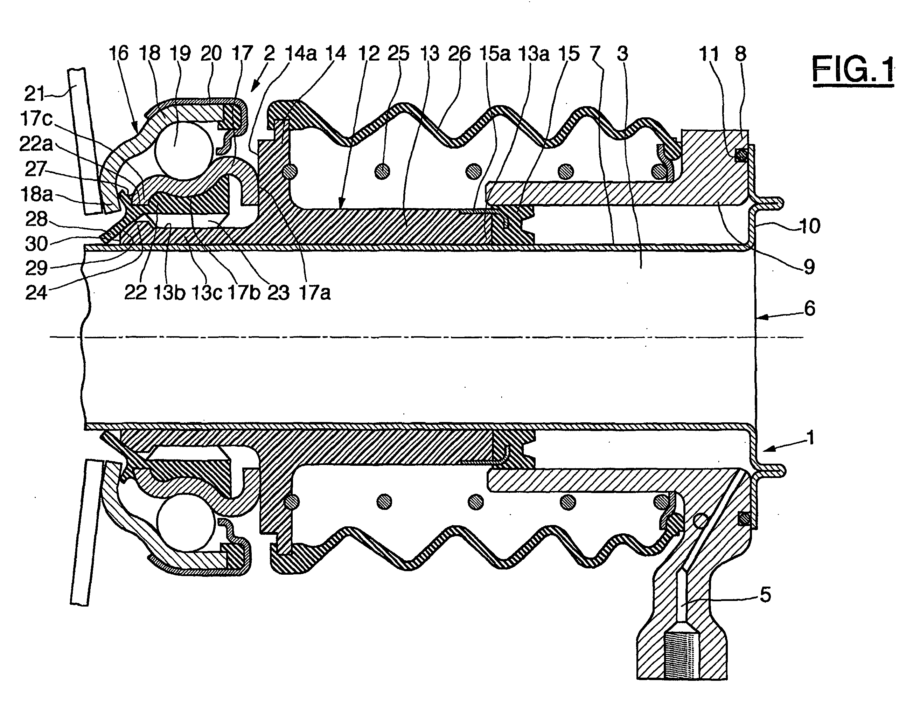

Tel qu'illustré sur la figure 1, le dispositif de manoeuvre d'embrayage est muni d'un dispositif de commande hydraulique comprenant une partie fixe 1 et une partie mobile 2. La partie fixe 1 est, en général, montée sur un carter de boîte de vitesses non représenté. La partie fixe 1 comprend également une chambre annulaire 4 destinée à recevoir un fluide hydraulique introduit par un orifice 5. La partie fixe 1 comprend un tube-guide 6 réalisé en tôle, dont la surface cylindrique intérieure forme un alésage 3 et dont la surface cylindrique extérieure 7 forme une paroi de la chambre 4. La partie fixe 1 comprend également un corps extérieur 8 concentrique au tube-guide 6 et dont l'alésage 9 forme une deuxième paroi de la chambre 4. Le fond de la chambre 4 est formé par une extrémité du tube-guide 3 emboutie pour former une portion radiale 10 s'étendant vers l'extérieur en contact le corps extérieur 8. On prévoit un joint annulaire d'étanchéité 11 disposé entre la portion radiale 10 du tube-guide 3 et le corps extérieur 8. Dans un mode de réalisation, le corps extérieur 8 présente des oreilles pour sa fixation au carter de la boîte de vitesses, la portion radiale 10 du tube-guide 3 étant pincée entre le corps et le carter. En variante, ladite portion 10 est fixée par sertissage, vissage ou autre sur ledit corps.

La partie mobile 2 comprend un élément de manoeuvre 12 formant piston réalisé par moulage d'un matériau synthétique tel qu'une matière plastique, ou métallique, par exemple à base d'aluminium et monté sur la surface extérieure 7 du tube-guide 3. L'élément de manoeuvre 12 comprend une portion tubulaire 13 et une collerette radiale 14. La portion tubulaire 13 a une extrémité 13a pourvue d'un joint annulaire d'étanchéité 15 qui se trouve disposé dans la chambre 4. Le joint d'étanchéité 15 et l'extrémité 13a de la portion tubulaire 13 sont solidarisés au moyen d'un élément métallique 15a en forme de coupelle. L'élément de manoeuvre 12 est mobile axialement par rapport à la partie fixe 1 sous l'effet de la pression du fluide introduit dans la chambre 4 par l'orifice 5.

L'élément de manoeuvre 13 ferme axialement la chambre 4 qui ainsi est à volume variable.

La partie mobile 2 comprend également un roulement de butée 16 pourvu d'une bague intérieure non tournante 17, d'une bague extérieure tournante 18, les bagues 17 et 18 étant concentriques et réalisées en tôle emboutie, d'une rangée d'éléments roulants 19 sous forme de billes et d'un élément d'étanchéité 20 solidaire de la bague extérieure 18 et s'étendant à proximité de la bague intérieure 17. Une extrémité libre 18a de la bague extérieure 18 est en contact local avec les extrémités des doigts du diaphragme d'embrayage 21 pour exercer une poussée axiale sur celui-ci.

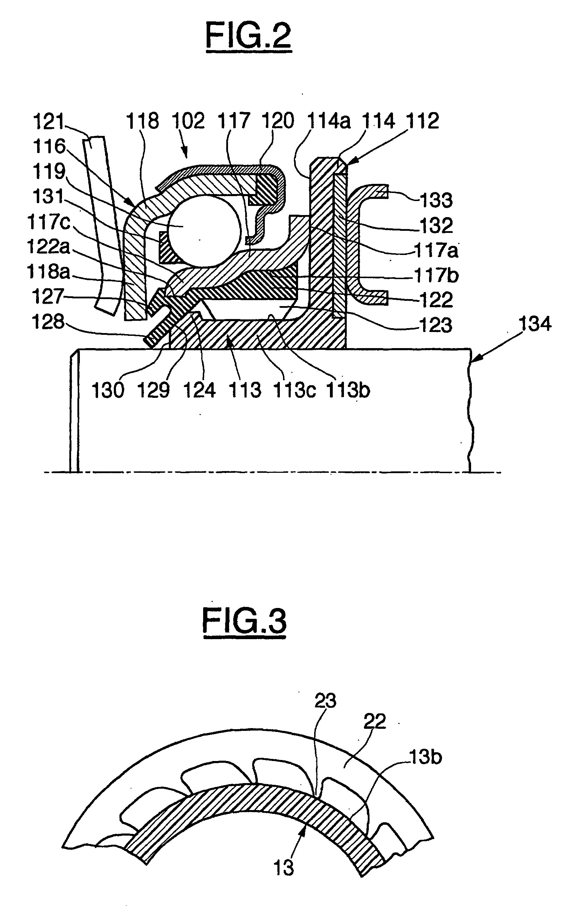

Une surface radiale 17a de la bague intérieure 17 est en contact avec une surface radiale 14a de la collerette radiale 14 qui sert de butée axiale au roulement 16 dans un sens. La surface radiale 17a est dirigée radialement vers l'intérieur. Un manchon élastique 22 est disposé dans l'alésage formé par la surface intérieure 17b de la bague intérieure 17 opposée aux élément roulants 19. Le manchon 22 comprend sur son alésage des protubérances radiales 23 de même largeur que ledit manchon 22 et qui viennent en contact avec la surface extérieure 13b de l'extrémité libre 13c de la portion tubulaire 13 opposée à l'extrémité libre 13a. Les protubérances radiales 23 sont élastiques et peuvent se déformer radialement. Les protubérances 23 du manchon 22 sont sous forme de nervures élastiques axiales en forme de lames inclinées par rapport à un plan passant par l'axe du dispositif de façon à augmenter leur élasticité radiale, voir figure 3. Cette inclinaison des protubérances 23 facilite l'autocentrage du roulement de butée 16. Le roulement de butée 16 peut ainsi se déplacer radialement par rapport à l'élément de manoeuvre 12 en frottant contre la surface 14a de la collerette radiale 14.

La liaison axiale entre le manchon 22 et la bague intérieure 17 est assurée par complémentarité de formes entre une rainure annulaire 22a aménagée à une extrémité du manchon et un retour radial dirigé vers l'intérieur 17c aménagé à l'extrémité de la bague intérieure dirigée vers le diaphragme.

L'extrémité libre 13b de la portion tubulaire 13 comprend un bourrelet annulaire 24 en saillie radialement vers l'extérieur. Les protubérances 23 du manchon 22 sont disposées axialement entre le bourrelet 24 et la collerette radiale 14. Le roulement 16 est solidaire axialement de l'élément de manoeuvre 12 grâce d'une part à la butée des protubérances 23 sur le bourrelet 24 et, d'autre part, à la butée de la surface radiale 17a de la bague intérieure 17 sur la surface radiale 14a de la collerette radiale 14.

Entre le corps extérieur 8 de la partie fixe 1 et la collerette radiale 14 sont disposés un ressort 25 à poussée axiale de façon à mettre la butée en appui sur le diaphragme 21 avec une certaine précharge. Le ressort 25 est entouré par un soufflet de protection 26 qui évite l'intrusion d'éléments étrangers à proximité du ressort 25 et de l'entrée de la chambre 4.

Le manchon 22 fait saillie axialement dans l'espace laissé libre entre le bourrelet 24 et la bague intérieure 17 et se prolonge par une lèvre annulaire d'étanchéité 27 qui vient frotter contre la surface interne de l'extrémité libre 18a de la bague extérieure 18. La lèvre 27 est dirigée axialement en direction du diaphragme et radialement vers l'extérieur, les bagues 17 et 18 étant en tôle emboutie et traitée pour avoir la dureté requise.

L'extrémité libre 18a est ici arrondie et coopère par sa surface extérieure avec des doigts de diaphragme dont l'extrémité est plane. On garantit ainsi l'étanchéité du roulement 16. Le manchon 22, se prolonge également par une lèvre de raclage inclinée 28 dirigée axialement en direction du diaphragme d'embrayage et radialement vers l'intérieur pour raclage forment frotter sur la surface extérieure 7 du tube-guide 3. On évite ainsi l'intrusion d'éléments étrangers entre la portion tubulaire 13 et la surface extérieure 7 du tube-guide 3. Le manchon 22, la lèvre d'étanchéité 27 et la lèvre de raclage 28 forment ainsi un ensemble monobloc pouvant être obtenu en une seule opération par moulage d'un élastomère ou matériau souple équivalent.

Au-delà du bourrelet 24 et de façon adjacente à celui-ci, l'extrémité libre 13c de la portion tubulaire 13 comprend un chanfrein 29 et une surface radiale 30 qui rejoint la surface extérieure 7 du tube-guide 3. On réalise ainsi une surface d'appui aménagée sur la surface du bourrelet faisant face au diaphragme. La lèvre de raclage 28 est en appui sur le chanfrein 29 de façon à augmenter sa stabilité par rapport à la surface extérieure 7 du tube-guide 3 et à améliorer le raclage. Ainsi, même lorsque le roulement de butée 16 est décentré par rapport au tube-guide 3 et à l'élément de manoeuvre 12, la lèvre de raclage 28 reste en contact avec la surface extérieure 7 du tube-guide 3 et empêche l'intrusion d'éléments étrangers. L'appui de la lèvre de raclage 28 sur le chanfrein 29 permet d'éviter un retournement éventuel de la lèvre de raclage 29 lors d'un mouvement de la partie mobile 2 vers le diaphragme d'embrayage 21.

Le dispositif de manoeuvre d'embrayage illustré sur la figure 2 est du type à commande mécanique. Les références des éléments semblables à ceux du mode de réalisation de la figure 1 sont augmentées du nombre 100.

L'élément de manoeuvre 112 comprend une portion tubulaire 113 qui s'étend uniquement du côté du roulement 116. Le roulement 116 est pourvu d'une cage 131 de maintien des éléments roulants 119. La collerette radiale 114 comprend, sur sa surface radiale 114b opposée à la surface radiale 114a une plaque d'appui 132 métallique de forme annulaire sur laquelle est surmoulée ladite collerette radiale 114. Cette plaque 132 qui a, de préférence, subi un traitement de durcissement superficiel, sert de surface de contact pour un organe de manoeuvre 133 qui exerce un effort en direction axiale pour provoquer le déplacement de la butée dans son ensemble lors d'une opération de débrayage.

La portion tubulaire 113 coulisse axialement par rapport à un tube-guide fixe 134. Le manchon 122 est similaire à celui de la figure 1. La lèvre d'étanchéité 127, en contact avec la surface interne de l'extrémité libre 118a de la bague extérieure 118 s'étend radialement vers l'intérieur à l'inverse de la figure 1 ce qui renforce l'efficacité de l'étanchéité et interdit l'entrée de particules étrangères dans le roulement. Ici, l'extrémité libre 118a est plane et coopère, au moyen de sa surface extérieure, avec les extrémités des doigts du diaphragme qui ont une forme convexe. Le manchon 122 comprend, à proximité de la lèvre d'étanchéité 127 une rainure annulaire 122a venant épouser, par complémentarité de formes, un retour radial 117c dirigé vers l'intérieur et aménagé à l'extrémité de la bague intérieure 117 dirigée vers le diaphragme. On garantit ainsi la solidarisation axiale entre le manchon 122 et la bague intérieure 117. La surface radiale 117a est dirigée radialement vers l'extérieur.

Grâce à l'invention, on réalise un organe élastique d'auto-alignement qui assure l'autocentrage du roulement de butée par rapport à l'élément de manoeuvre, l'étanchéité entre les deux bagues du roulement de butée et le raclage sur la surface extérieure du tube-guide garantissant ainsi un coulissement correct de l'organe de manoeuvre sur le tube-guide sans risque de grippage ou de fuites.

On appréciera que le roulement a une forme simple par rapport à ceux de l'art antérieur, car la bague non tournante est dotée d'une surface radiale 17a, 117a de faible hauteur.

## Revendications

1. Dispositif de manoeuvre d'embrayage du type comprenant un roulement de butée (16), muni d'une bague non tournante et d'une bague tournante, capable d'agir sur un diaphragme de mécanisme d'embrayage (21), un élément de manoeuvre (12) comprenant une portion tubulaire (13) et une collerette radiale (14), mobile axialement le long d'un tube-guide (6), et un organe d'auto-alignement (22, 23) élastique disposé radialement entre le roulement de butée (16) et la portion tubulaire (13) de l'élément de manoeuvre (12), **caractérisé par le fait que** l'organe d'auto-alignement (22, 23) élastique comprend une lèvre annulaire de raclage (28) venant frotter sur le tube-guide (6) pour former un joint racleur.

2. Dispositif selon la revendication 1, **caractérisé par le fait que** la lèvre de raclage est dirigée axialement vers le mécanisme d'embrayage et radialement vers l'intérieur.

3. Dispositif selon la revendication 1 ou 2, **caractérisé par le fait que** l'organe d'auto-alignement élastique et la lèvre de raclage forment un ensemble monobloc.

4. Dispositif selon l'une quelconque des revendications précédentes, **caractérisé par le fait que** l'organe d'auto-alignement élastique comprend un manchon (22) en contact avec la bague non tournante du roulement de butée, l'alésage dudit manchon étant muni d'une pluralité de nervures (23) radialement en saillie vers l'intérieur et s'étendant axialement sur la largeur du manchon, les nervures étant inclinées et étant en forme de lames dont les extrémités libres viennent en appui sur la portion tubulaire de l'organe de manoeuvre.

5. Dispositif selon selon l'une quelconque des revendications précédentes, **caractérisé par le fait que** l'organe d'auto-alignement élastique comprend une lèvre annulaire supplémentaire (27) assurant l'étanchéité entre les bagues non tournante et tournante du roulement de butée.

6. Dispositif selon l'une quelconque des revendications précédentes, **caractérisé par le fait que** l'extrémité libre de la portion tubulaire de l'organe de manoeuvre comprend un bourrelet annulaire (24) dirigé radialement vers l'extérieur pour former une butée axiale pour l'organe d'auto-alignement élastique.

7. Dispositif selon l'une quelconque des revendications précédentes, **caractérisé par le fait que** la lèvre de raclage est en contact avec une surface d'appui (29) de l'extrémité libre de la portion tubulaire de l'organe de manoeuvre.

8. Dispositif selon la revendication 7, **caractérisé par le fait que** la surface d'appui est aménagée à la faveur du bourrelet sur une surface de celui-ci faisant face au diaphragme.

9. Dispositif selon l'une quelconque des revendications précédentes, **caractérisé par le fait que** l'organe d'auto-alignement élastique est solidarisé à la bague non tournante par complémentarité de formes.

10. Dispositif l'une quelconque des revendications 1 à 8, **caractérisé par le fait que** l'organe d'auto-alignement élastique est solidarisé à la bague non tournante par collage ou surmoulage.

11. Dispositif selon l'une quelconque des revendications précédentes, **caractérisé par le fait qu'**il est à commande mécanique.

12. Dispositif selon l'une quelconque des revendications 1 à 8, **caractérisé par le fait qu'**il est à commande hydraulique.

## Claims

1. Device for operating a clutch of the type comprising a thrust ball bearing (16), equipped with a non-rotating race and with a rotating race, capable of acting on a diaphragm of a clutch mechanism (21), an operating element (12) comprising a tubular portion (13) and a radial flange (14), which can move axially along a guide tube (6), and an elastic self-alignment member (22, 23) arranged radially between the thrust ball bearing (16) and the tubular portion (13) of the operating element (12), **characterized in that** the elastic self-alignment member (22, 23) comprises an annular scraping lip (28) which rubs against the guide tube (6) to form a scraping seal.

2. Device according to Claim 1, **characterized in that** the scraping lip is directed axially towards the clutch mechanism and radially towards the inside.

3. Device according to Claim 1 or 2, **characterized in that** the elastic self-alignment member and the scraping lip form a one-piece assembly.

4. Device according to any one of the preceding claims, **characterized in that** the elastic self-alignment member comprises a sleeve (22) in contact with the non-rotating race of the thrust ball bearing, the bore of the said sleeve having a number of ribs (23) projecting radially towards the inside and extending axially along the width of the sleeve, the ribs being inclined and being in the form of strips, the free ends of which rest on the tubular portion of the operating member.

5. Device according to according to [sic] any one of the preceding claims, **characterized in that** the elastic self-alignment member comprises an additional annular lip (27) which provides a seal between the non-rotating and the rotating races of the thrust ball bearing.

6. Device according to any one of the preceding claims, **characterized in that** the free end of the tubular portion of the operating member comprises an annular bulge (24) directed radially outwards to form an axial stop for the elastic self-alignment member.

7. Device according to any one of the preceding claims, **characterized in that** the scraping lip is in contact with a bearing surface (29) of the free end of the tubular portion of the operating member.

8. Device according to Claim 7, **characterized in that** the bearing surface is formed by means of the bulge on a surface thereof that faces the diaphragm.

9. Device according to any one of the preceding claims, **characterized in that** the elastic self-alignment member is secured to the non-rotating race by means of mating shapes.

10. Device according to any one of Claims 1 to 8, **characterized in that** the elastic self-alignment member is secured to the non-rotating race by bonding or overmoulding.

11. Device according to any one of the preceding claims, **characterized in that** it is mechanically controlled.

12. Device according to any one of Claims 1 to 8, **characterized in that** it is hydraulically controlled.

## Patentansprüche

1. Kupplungsausrückeinrichtung von einer Art, die ein Ausrückwälzlager (16), das mit einem stillstehenden Ring und einem umlaufenden Ring versehen ist und in der Lage ist, auf eine Kupplungsmembranfeder (21) zu wirken, ein Betätigungselement (12), das einen rohrförmigen Abschnitt (13) und einen radialen Abschnitt (14) aufweist und das axial beweglich längs eines Führungsrohres (6) ist, und ein elastisches Zentrierelement (22,23) aufweist, das radial zwischen dem Lager (16) und dem rohrförmigen Abschnitt (13) des Betätigungselementes (12) angeordnet ist, **dadurch gekennzeichnet, dass** das elastische Zentrierelement (22,23) eine ringförmige Abstreiflippe (28) aufweist, die mit dem Rohr (6) gleitend in Berührung steht, um einen Abstreifverbindung zu bilden.

2. Einrichtung nach Anspruch 1, **dadurch gekennzeichnet, dass** die Abstreiflippe in axialer Richtung auf die Kupplungsanordnung zu und in radialer Richtung nach innen gerichtet ist.

3. Einrichtung nach Anspruch 1 oder 2, **dadurch gekennzeichnet, dass** das elastische Zentrierelement und die Abstreiflippe mit einander einstückig sind.

4. Einrichtung nach einem der vorhergehenden Ansprüche, **dadurch gekennzeichnet, dass** das elastische Zentrierelement eine Hülse (22) aufweist, die in Kontakt mit dem stillstehenden Ring des Wälzlagers ist, wobei die Bohrung der Hülse mit einer Vielzahl von Rippen (23) versehen ist, die radial nach innen vorstehen und sich axial über die Länge der Hülse erstrecken, wobei die Rippen schräg stehen und lamellenförmig sind und deren freie Enden auf dem rohrförmigen Abschnitt des Betätigungselements aufliegen.

5. Einrichtung nach einem der vorhergehenden Ansprüche, **dadurch gekennzeichnet, dass** das elastische Zentrierelement eine zusätzliche ringförmige Lippe (27) aufweist, die die Dichtheit zwischen dem stillstehenden und dem umlaufenden Ring des Wälzlagers sicherstellt.

6. Einrichtung nach einem der vorhergehenden Ansprüche, **dadurch gekennzeichnet, dass** das freie Ende des rohrförmigen Abschnitts des Betätigungselements einen Ringwulst (24) aufweist, der radial nach außen gerichtet ist, um einen axialen Anschlag für das elastische Zentrierelement zu bilden.

7. Einrichtung nach einem der vorhergehenden Ansprüche, **dadurch gekennzeichnet, dass** die Abstreiflippe mit einer Auflagefläche (29) des freien Endes des rohrförmigen Abschnitts des Betätigungselements in Berührung steht.

8. Einrichtung nach Anspruch 7, **dadurch gekennzeichnet, dass** die Auflagefläche auf einer Oberfläche des Wulstes gegenüber der Membranfeder angeordnet ist.

9. Einrichtung nach einem der vorhergehenden Ansprüche, **dadurch gekennzeichnet, dass** das elastische Zentrierelement an dem stillstehenden Ring durch Formschluss befestigt ist.

10. Einrichtung nach einem der Ansprüche 1 bis 8, **dadurch gekennzeichnet, dass** das elastische Zentrierelement an dem stillstehenden Ring durch Kleben oder Anspritzen befestigt ist.

11. Einrichtung nach einem der vorhergehenden Ansprüche, **dadurch gekennzeichnet, dass** sie mechanisch betätigt wird.

12. Einrichtung nach einem der Ansprüche 1 bis 8, **dadurch gekennzeichnet, dass** sie hydraulisch betätigt wird.
